# EUROPÄISCHE PATENTSCHRIFT

(11) **EP 3 188 866 B1**
(45) Veröffentlichungstag und Bekanntmachung des Hinweises auf die Patenterteilung: **12.12.2018**
(21) Anmeldenummer: 15767074.6
(22) Anmeldetag: 11.08.2015
(51) Int. Cl.: B23C 5/22, B23C 5/06, B23C 5/10, B23C 5/20

(54) **DOPPELSEITIGER SCHNEIDEINSATZ UND FRÄSWERKZEUG**
DOUBLE-SIDED CUTTING INSERT AND MILLING TOOL
PLAQUETTE DE COUPE DOUBLE FACE ET OUTIL DE FRAISAGE

(30) Priorität: 03.09.2014 AT 3112014 U
(43) Veröffentlichungstag der Anmeldung: 12.07.2017
(73) Patentinhaber: Ceratizit Austria Gesellschaft m.b.H., 6600 Reutte (AT)
(72) Erfinder: BURTSCHER, Peter, A-6651 Häselgehr (AT)
(74) Vertreter: Ciesla, Dirk
(86) Internationale Anmeldenummer: PCT/AT2015/000107
(87) Internationale Veröffentlichungsnummer: WO 2016/033620

(56) Entgegenhaltungen:
- DE-U1- 8 915 088
- JP-A- H07 237 025
- JP-A- H10 277 815
- US-A- 5 421 679
- US-A- 5 718 540
- US-A1- 2007 041 797
- US-A1- 2010 239 379

## Beschreibung

Die vorliegende Erfindung betrifft einen doppelseitig verwendbaren Schneideinsatz für einen Eckfräser gemäß dem Oberbegriff des Anspruchs 1, und ein Fräswerkzeug gemäß dem Oberbegriff des Anspruchs 10. Für die spanabhebende Bearbeitung von insbesondere metallischen Werkstücken sind Fräswerkzeuge bekannt, bei denen an einem Trägerkörper des Fräswerkzeugs in radialer oder tangentialer Ausrichtung ein oder mehrere austauschbare Schneideinsätze angeordnet sind. Der Trägerkörper ist normalerweise aus einem zähen Material wie Werkzeugstahl aufgebaut, während die Schneideinsätze aus einem harten und verschleißfesten Material, typischerweise aus Hartmetall, Cermet oder keramischen Materialien hergestellt sind und Verbrauchsartikel darstellen, die aufgrund von Abnützung in mehr oder weniger regelmäßigen Intervallen ausgetauscht werden müssen. Aus ökonomischen Gründen sind Schneideinsätze häufig als sogenannte indexierbare Schneideinsätze ausgebildet, die eine Mehrzahl von identisch ausgebildeten Schneidkanten aufweisen. Diese Schneidkanten können durch Veränderung der relativen Ausrichtung des Schneideinsatzes zum Trägerkörper des Fräswerkzeugs sukzessive in eine aktive Position gebracht werden, in der diese eine zerspanende Werkstückbearbeitung durchführen. Die jeweils inaktiven Schneidkanten treten dabei nicht mit dem zu bearbeitenden Werkstück in Eingriff und können sukzessive z.B. nach Abnützung der zuvor aktiven Schneidkanten in die aktive, zerspanende Position gebracht werden. Zur effizienteren Ausnutzung des Schneideinsatzes ist man bestrebt, eine möglichst große Anzahl an nacheinander verwendbaren Schneidkanten an einem Schneideinsatz zur Verfügung zu stellen.
Neben einseitigen Schneideinsätzen, bei denen die sukzessiv eingesetzten Schneidkanten nur an einer Arbeitsfläche der meist plattenförmig ausgeführten Schneideinsätze angeordnet sind, werden verstärkt doppelseitig verwendbare Schneideinsätze eingesetzt, bei denen die Schneidkanten an zwei gegenüberliegenden Arbeitsflächen des Schneideinsatzes angebracht sind. Doppelseitige Schneideinsätze haben gegenüber einseitigen Schneideinsätzen den Vorteil, dass der Schneideinsatz nach dem Verschleiß der Schneidkanten auf einer Seite umgedreht werden kann, sodass die Anzahl der insgesamt zur Verfügung stehenden Schneidkanten gegenüber einseitigen Schneideinsätzen verdoppelt wird. Bei doppelseitigen Schneideinsätzen wird es allerdings mit zunehmender Anzahl von Schneidkanten an einem Schneideinsatz schwieriger, die während des Zerspanungsvorgangs inaktiven Schneidkanten vor Verschleiß bzw. Beschädigung zu schützen und die bei der Rotation des Fräswerkzeugs benötigten Freiwinkel der Schneidkanten in jeder Indexierungs-Position zu realisieren.

Es sind Fräswerkzeuge bekannt, die sowohl am Umfang schneidende Hauptschneidkanten oder Hauptschneiden als auch an der Stirnseite des Fräsers angeordnete Neben- oder Planschneidkanten aufweisen. Die Planschneidkante oder Planschneide ist üblicherweise im eingebauten Zustand des Schneideinsatzes in einem Fräswerkzeug im Wesentlichen senkrecht zu einer Rotationsachse des Fräswerkzeugs angeordnet und bewirkt eine Glättung der Oberfläche. Üblicherweise verläuft die Planschneidkante allerdings nicht exakt senkrecht zu der Rotationsachse, sondern ist in Richtung zu der Rotationsachse leicht freigestellt, z.B. um bis zu 1°. Bei Eckfräsern zum Fräsen von 90°-Grad-Ecken oder -Schultern sind die Hauptschneidkante und die über eine Schneidecke mit dieser verbundene zugehörige Planschneidkante derart angeordnet, dass diese bei der Zerspanung eine Ecke mit einem Winkel von zumindest im Wesentlichen 90° erzeugen, wobei der Übergangsradius durch den Krümmungsradius der Schneidecke bestimmt wird.

Um im Betrieb eine Abnutzung der passiven, bezüglich der Rotation hinteren Schneidkante zu vermeiden, ist bekannt, den Schneideinsatz gekippt im Fräswerkzeug anzuordnen und zwar sowohl in axialer Richtung nach vorne gekippt, um die hinter der in das Werkstück eingreifenden Planschneidkante befindliche Schneidkante zu schützen, als auch in radialer Richtung gekippt, um die sich hinter der in das Werkstück eingreifenden Hauptschneidkante befindliche Schneidkante, zu schützen.

US 2010/0239379 A1 beschreibt einen Schneideinsatz gemäß dem Oberbegriff des Anspruchs 1 mit einem Körper, Hilfsschneidkanten mit konvexer Kurvenform und Hauptschneidkanten. Der Körper hat eine obere Oberfläche, eine untere Oberfläche, Seitenoberflächen, die die obere Oberfläche und die untere Oberfläche verbinden, und Eckenoberflächen, die benachbarte Seitenoberflächen verbinden. Die Hilfsschneidkanten sind an Schnittlinien zwischen den oberen und unteren Oberflächen mit den Seitenoberflächen ausgebildet. Die Hauptschneidkanten sind an Schnittlinien zwischen den oberen und unteren Oberflächen mit den Eckenoberflächen ausgebildet. Die Hauptschneidkante in der oberen Oberfläche erstreckt sich von einem Ende einer benachbarten Hilfsschneidkante bis zu ihrer Mitte in einer Richtung zu der unteren Oberfläche und von der Mitte bis zu einem Ende einer anderen benachbarten Hilfsschneidkante in einer Richtung weg von der unteren Oberfläche.

Es ist zu beachten, dass in dem vorliegenden technischen Gebiet gewisse Begriffe wie z.B. Freiwinkel, Spanwinkel, etc. einerseits "nominell" in Bezug auf den Schneideinsatz definiert werden können und andererseits auch (abweichend) "effektiv" in Bezug auf die Einbausituation des Schneideinsatzes an einem Fräswerkzeug relativ zu dem Werkstück definiert werden können. In der folgenden Beschreibung werden diese Begriffe hauptsächlich "nominell" verwendet, ohne dass jeweils ein entsprechender Zusatz ausdrücklich genannt wird. Die resultierenden "effektiven" Winkel werden durch die "nominellen" Winkel in Kombination mit der radialen und axialen Anstellung des Schneideinsatzes in dem Trägerkörper des Fräswerkzeugs bestimmt.

Es ist weiters zu beachten, dass die Begriffe "Oberseite" und "Unterseite" ausschließlich der einfacheren Beschreibung dienen und nicht einschränkend zu verstehen sind. Abhängig von der Befestigungsorientierung im Fräswerkzeug kann sich daher die Unterseite des Schneideinsatzes oberhalb der Oberseite befinden und umgekehrt, die Oberseite unterhalb der Unterseite liegen.

Die Aufgabe der vorliegenden Erfindung ist, einen verbesserten Schneideinsatz zur Verwendung in einem Fräswerkzeug, insbesondere in einem Eckfräser und ein verbessertes Fräswerkzeug zur Verfügung zu stellen, mit dessen Hilfe im zu bearbeitenden Werkstück zuverlässig und effizient Schultern mit im wesentlichen 90°-Ecken gefräst werden können und im Betrieb eine hohe Güte der bearbeiteten Werkstückoberfläche erreicht werden kann.

Der doppelseitig verwendbare Schneideinsatz weist einen plattenförmigen Grundkörper mit einer Oberseite und einer Unterseite auf, wobei der Grundkörper in Aufsicht auf die Oberseite eine im Wesentlichen quadratische Grundform besitzt, und die Unterseite und Oberseite durch eine umlaufende Seitenfläche verbunden sind. An einem Übergang von der Oberseite zu der umlaufenden Seitenfläche ist eine erste Schneidkante ausgebildet, die sich zumindest abschnittsweise entlang des Umfangs des Grundkörpers erstreckt; ebenso ist an einem Übergang von der Unterseite zu der umlaufenden Seitenfläche eine zweite Schneidkante ausgebildet, die sich zumindest abschnittsweise entlang des Umfangs des Grundkörpers erstreckt. Der Schneideinsatz weist bezüglich einer Symmetrieachse eine 4-zählige Rotationssymmetrie auf. Senkrecht zur Symmetrieachse befindet sich eine Referenzebene, die den Schneideinsatz in zwei virtuelle Hälften unterteilt. Die erste und zweite Schneidkante weisen jeweils vier Schneidkantenabschnitte auf, die indexiert, d.h. sukzessive in die aktive Position gebracht werden können. Ein Schneidkantenabschnitt weist dabei jeweils eine Hauptschneide und eine Planschneide auf, die über eine zugehörige abgerundete Schneidecke miteinander verbunden sind. Die erste bzw. die zweite Schneidkante weisen daher alternierend angeordnete Hauptschneiden und Planschneiden auf, wobei die alternierende Anordnung an den Ecken durch Schneidecken unterbrochen ist. Es befindet sich jeweils eine Hauptschneide und eine über eine Schneidecke mit der Hauptschneide verbundene Planschneide in einer aktiven Position, während in dieser Indexierung die restlichen Hauptschneiden und Planschneiden inaktiv sind. Der Hauptschneide ist jeweils eine, bevorzugt ebene, Hauptfreifläche zugeordnet, die unmittelbar angrenzend an die Hauptschneide in der umlaufenden Seitenfläche ausgebildet ist. Der Planschneide ist jeweils eine, bevorzugt ebene, Planfreifläche zugeordnet, die unmittelbar angrenzend an die Planschneide in der umlaufenden Seitenfläche ausgebildet ist. Erfindungsgemäß haben die erste und zweite Schneidkante jeweils im Bereich der Schneidecken den größten Abstand von der gedachten Referenzebene, die den Schneideinsatz in zwei Hälften unterteilt. Der Abstand zwischen jeder Hauptschneide und der Referenzebene ist daher (außer ggfs. in dem unmittelbar an die Schneidecke angrenzenden Bereich) über den gesamten Verlauf der Hauptschneide immer geringer als der größte Abstand der Schneidecken von der Referenzebene. Analog ist der Abstand zwischen jeder Planschneide und der Referenzebene über den gesamten Verlauf der Planschneide immer geringer als der größte Abstand der Schneidecken von der Referenzebene. Der erfindungsgemäße Schneideinsatz ist weiters dadurch charakterisiert, dass sich ein zwischen der Hauptfreifläche und der Referenzebene ausgebildeter Außenwinkel von dem zwischen der Planfreifläche und der Referenzebene ausgebildeten Außenwinkel unterscheidet, wobei der Außenwinkel zwischen der Hauptfreifläche und der Referenzebene größer als der Außenwinkel zwischen der Planfreifläche und der Referenzebene ist. Die jeweiligen Außenwinkel können entlang des Verlaufs der Haupt- bzw. Planschneiden variieren. An zueinander korrespondierenden Positionen der Haupt- und Planschneide, die denselben Abstand zur jeweils zugehörigen Schneidecke haben, ist der Außenwinkel im Bereich der Hauptschneide aber immer größer gewählt als der Außenwinkel der Planschneide.

Durch die erfindungsgemäße Ausgestaltung des Schneideinsatzes können aus dem zu bearbeitenden Werkstück insbesondere 90° Schultern mit guter Oberflächengüte gefräst werden. Bevorzugt ist der erfindungsgemäße Schneideinsatz in der Grundform einer sogenannten S-Platte (square, quadratisch) ausgeführt. Der Schneidsatz ist doppelseitig einsetzbar und besitzt pro Schneidkante vier unabhängig voneinander einsetzbare Schneidkantenabschnitte. Es sind also insgesamt acht individuell einsetzbare Hauptschneiden und zugehörige acht Planschneiden vorhanden, womit eine effiziente Ausnutzung des Schneideinsatzes gewährleistet wird. Die acht zwischen jeweiliger Haupt- und Planschneide liegenden Schneidecken sind von der Referenzebene betrachtet erhöht angeordnet.

Die jeweiligen Hauptschneiden verlaufen ausgehend von einer aktiven Schneidecke, die sich im Betrieb zwischen einer in das zu bearbeitende Material eingreifenden aktiven Hauptschneide und einer in das zu bearbeitende Material eingreifenden aktiven Planschneide befindet, bis zur benachbarten inaktiven Planschneide bevorzugt in monoton abfallender Weise, d.h. die Hauptschneide nähert sich ausgehend von einer Schneidecke über ihren gesamten Verlauf der Referenzebene an oder verläuft höchstens bereichsweise parallel zu dieser. Dadurch kann erreicht werden, dass auch in entsprechender verkippter, axial negativer Einbaulage des Schneideinsatzes im Fräswerkzeug die Hauptschneide über die gesamte Länge einen positiven effektiven Axialwinkel aufweist und die gesamte Länge der Hauptschneide für einen weichen und effektiven Zerspanungsprozess genützt werden kann. Gleichzeitig wird durch die axial negativ verkippte Einbaulage des Schneideinsatzes die in Rotationsrichtung hinter der in das Werkstück eingreifenden Planschneide befindliche Schneidkante geschützt.

In einer bevorzugten Ausführungsform gehen die Hauptschneiden fluchtend in die benachbarten, einem anderen Schneidkantenabschnitt zugehörigen Planschneiden über. Die jeweiligen Planschneiden verlaufen daher von einer benachbarten, einem anderen Schneidkantenabschnitt zugehörigen Hauptschneide bis zur zugehörigen Schneidecke bevorzugt in monoton abfallender Weise. Die Planschneide nähert sich also ausgehend von einer benachbarten Hauptschneide über ihren gesamten Verlauf in Richtung Schneidecke der Referenzebene an oder verläuft höchstens bereichsweise parallel zu dieser. Der an die Schneidecke anschließende Bereich der Hauptschneide weist einen größeren Abstand zu der Referenzebene auf, als der an die Schneidecke anschließende Bereich der Planschneide. Die Schneidecke fällt daher in Richtung Planschneide stärker ab als in Richtung Hauptschneide, sofern die Schneidecke in Richtung Planschneide überhaupt abfällt. Der Schneideinsatz wird in radial negativ verkippter Einbaulage am Trägerkörper des Fräswerkzeuges befestigt, wodurch die in Rotationsrichtung hinter der aktiven Hauptschneide liegende passive Schneidkante vor Abnützung geschützt wird. Die unterschiedliche Neigung der Freiflächen im Bereich der Hauptschneide und im Bereich der Planschneide, d.h. der Hauptfreifläche und der Planfreifläche, ermöglicht die benötigte unabhängige Verkippung in Axial- und Radialrichtung.

In einer bevorzugten Ausführungsform ist die erste bzw. zweite Schneidkante als vollumfängliche Schneide ausgebildet, d.h. die Haupt- und Planschneiden sind, unterbrochen durch Schneidecken, alternierend angeordnet und benachbarte Haupt- und Planschneiden, die nicht demselben Schneidkantenabschnitt zugehörig sind, schließen jeweils direkt aneinander an. Benachbarte, unterschiedlichen Schneidkantenabschnitten zugehörige Haupt- und Planschneiden grenzen also direkt aneinander an. Es ist aber auch möglich, dass die Enden benachbarter, unterschiedlichen Schneidkantenabschnitten zugehöriger Haupt- und Planschneiden nicht unmittelbar aneinanderstoßen. Ein Schneideinsatz mit einer vollumfänglichen Schneide hat den Vorteil, dass die gesamte Länge des Umfangs des Schneideinsatzes effizient genutzt werden kann. Bevorzugt schließen aneinander angrenzende, unterschiedlichen Schneidkantenabschnitten zugehörige Haupt- und Planschneiden einen stumpfen Innenwinkel, insbesondere im Bereich zwischen 170° und kleiner 180°, ein. Durch diese Ausgestaltung kann die in Umfangrichtung des Schneideinsatzes an eine aktive Planschneide angrenzende inaktive Hauptschneide besser vor Abnützung geschützt werden.

In einer vorteilhaften Ausführungsform schließen die Hauptschneide und die an derselben Schneidecke anliegende Planschneide - in Aufsicht auf die Oberseite des Schneideinsatzes - einen inneren Winkel von etwa 85° bis 95° ein, bevorzugt beträgt dieser eingeschlossene Winkel 90° bis 92°. Dadurch können, wenn der Schneideinsatz am Trägerkörper des Fräswerkzeuges in entsprechender axial und radial verkippter Einbaulage positioniert ist, im zu bearbeitenden Werkstück sehr präzise Schultern mit 90° Ecken gefräst werden, während gleichzeitig die inaktiven Haupt- und Planschneiden zuverlässig geschützt werden.

Die umlaufende Seitenfläche des erfindungsgemäßen Schneideinsatzes weist unmittelbar angrenzend an die Hauptschneiden jeweils Hauptfreiflächen bzw. unmittelbar angrenzend an die Planschneiden jeweils Planfreiflächen auf. Die zwischen den Hauptfreiflächen und der Referenzebene befindlichen Außenwinkel unterscheiden sich von den zwischen den Planfreiflächen und der Referenzebene befindlichen Außenwinkeln, wobei die ersteren größer sind als die letzteren.

Entsprechend einer bevorzugten Ausführungsform nähern sich die Planfreiflächen mit zunehmendem Abstand von der zugeordneten Planschneide der Symmetrieachse an. Mit anderen Worten weist der Schneideinsatz in diesem Fall einen positiven nominellen Planfreiwinkel auf. Die Planfreiflächen können sich in dieser Weise bspw. bis zu einem Bereich in der Nähe der Referenzebene erstrecken, wo sie auf die entsprechende Planfreifläche der auf der gegenüberliegenden Seite des Schneideinsatzes befindlichen Planschneide treffen. Bevorzugt sind die Planfreiflächen als ebene Flächen ausgebildet.

Der Außenwinkel zwischen der Hauptfreifläche und der Referenzebene ist jeweils größer als der Außenwinkel zwischen der Planfreifläche und der Referenzebene.

In einer bevorzugten Ausführungsform bildet die Hauptfreifläche einen stumpfen Außenwinkel zur Referenzebene aus, die Hauptfreiflächen entfernen sich also mit zunehmendem Abstand von der zugeordneten Hauptschneide von der Symmetrieachse. Der zwischen der jeweiligen Hauptfreifläche und der Referenzebene gebildete Außenwinkel ist somit bevorzugt größer als 90°. Mit anderen Worten weist der Schneideinsatz in diesem Fall einen negativen nominellen Hauptfreiwinkel auf. Bevorzugt sind auch die Hauptfreiflächen als ebene Flächen ausgebildet.

In einer bevorzugten Ausführungsform, bei der sowohl die Hauptfreiflächen als auch die Planfreiflächen als ebene Flächen ausgebildet sind, ergibt sich für die umlaufende Seitenfläche eine segmentierte Struktur, bei der sich die Hauptfreiflächen und die Planfreiflächen schneiden. Typischerweise erstrecken sich die Hauptfreiflächen aufgrund des größeren Außenwinkels zu der Referenzebene im Vergleich zu den Planfreiflächen über einen flächenmäßig kleineren Bereich. Dabei können die Hauptfreiflächen insbesondere als Facetten auf den Planfreiflächen ausgebildet sein.

In Aufsicht auf die Oberseite des Schneideinsatzes ist in einer bevorzugten Ausführungsform die äußere Kontur der ersten Schneidkante nicht deckungsgleich mit der äußeren Kontur der zweiten Schneidkante. Bevorzugt fluchten bei Aufsicht entlang der Symmetrieachse die Schneidecken der ersten Schneidkante nicht mit den dahinterliegenden Schneidecken der zweiten Schneidkante. Die Schneidecken der zweiten Schneidkante können in einer solchen Aufsicht auf die Oberseite des Schneideinsatzes insbesondere um einen Winkel zwischen größer als 0° und 5° bezüglich einer Rotation um die Symmetrieachse zu den Schneidecken der ersten Schneidkante verdreht angeordnet sein. Die Nicht-deckungsgleichheit zwischen der äußeren Kontur beider Schneidkanten bzw. Verdrehung der Schneidecken ermöglicht in Kombination mit der axial und radial verkippten Einbaulage des Schneideinsatzes, die inaktiven Schneidkanten, die sich auf der zu den aktiv ins Werkstück eingreifenden Haupt- und Planschneiden gegenüberliegenden Seite befinden, noch besser vor Beschädigung zu schützen.

Die jeweilige Planschneide kann in Aufsicht auf die zugeordnete Planfreifläche zumindest bereichsweise konvex ausgebildet sein. Dies bewirkt eine - verglichen mit einer Ausgestaltung, bei der die Planschneide bspw. gerade verläuft - deutlich verbesserte Qualität der mit der Planschneide geglätteten Oberfläche am bearbeiteten Werkstück.

Gemäß einer Ausführungsform sind jeweils die Oberseite und die Unterseite angrenzend an die jeweilige Schneidkante mit Spanflächen versehen, die sich mit zunehmender Entfernung von der jeweiligen Schneidkante an die Referenzebene annähern. Bevorzugt können die Oberseite und die Unterseite jeweils mit einer spanleitenden Struktur versehen sein, die eine verbesserte Spanformung bewirkt.

Bevorzugt beträgt die Länge der Hauptschneiden mehr als das vierfache, insbesondere mehr als das fünffache der Länge der Planschneiden.

In vorteilhafter Weise weist der Schneideinsatz konzentrisch zur Symmetrieachse eine Durchgangsöffnung auf, die sich zwischen der Oberseite und Unterseite des Schneideinsatzes erstreckt und zur Aufnahme eines Befestigungsmittels, wie z.B. einer Schraube, dient, mit dessen Hilfe der Schneideinsatz am Trägerkörper des Fräswerkzeugs in bekannter Weise bevorzugt in radialer Ausrichtung befestigt wird.

Unter radialer Ausrichtung wird eine Anordnung verstanden, bei der die Oberseite bzw. Unterseite des Schneideinsatzes nach vorne in Umfangsrichtung des rotierenden Fräswerkzeugs orientiert ist. Im Gegensatz dazu ist bei einer tangentialen Ausrichtung die Schmalseite (Seitenfläche) des Schneideinsatzes nach vorne in Umfangsrichtung des rotierenden Fräswerkzeugs gerichtet. Bei einer radialen Ausrichtung sind daher die bei der spanenden Bearbeitung auftretenden Schnittkräfte überwiegend senkrecht zur Referenzebene des Schneidwerkzeugs und nicht parallel zur Referenzebene, wie dies bei einer tangentialen Anordnung der Fall wäre. Ein radial angeordneter Schneideinsatz wird auch als Radial-Schneideinsatz bezeichnet.

Teil der Erfindung ist auch ein Fräswerkzeug mit einem Trägerkörper und zumindest einem zuvor beschriebenen Schneideinsatz, wobei der Schneideinsatz in radialer Ausrichtung am Trägerkörper des Fräswerkzeugs befestigt ist. Der Schneideinsatz ist am Fräswerkzeug derart angeordnet, dass die aktive, mit dem Werkstück in Eingriff gelangende Planschneide im Wesentlichen senkrecht zu einer Rotationsachse des Fräswerkzeugs ausgerichtet ist, wobei eine solche im Wesentlichen senkrechte Ausrichtung auch eine leichte Freistellung in Richtung der Rotationsachse um bis zu 1° umfasst. Die an die Planschneide angrenzende Hauptschneide, die sich bezüglich der Rotationsachse radial außen befindet und in Rotationsrichtung an der vorderen Schneidkante angeordnet ist, bildet die aktive, ins zu bearbeitende Werkstück eingreifende Hauptschneide.

Im Folgenden wird die Erfindung an Hand von Figuren näher erläutert. Es zeigen
- Fig. 1:: eine perspektivische Ansicht eines doppelseitigen Schneideinsatzes gemäß einer Ausführungsform;
- Fig. 2:: eine Seitenansicht auf den Schneideinsatz von Fig. 1 in einer Richtung senkrecht zu einer Symmetrieachse und im Wesentlichen senkrecht zu einer Seitenfläche;
- Fig. 3:: eine Aufsicht auf den Schneideinsatz von Fig. 1 entlang der Symmetrieachse;

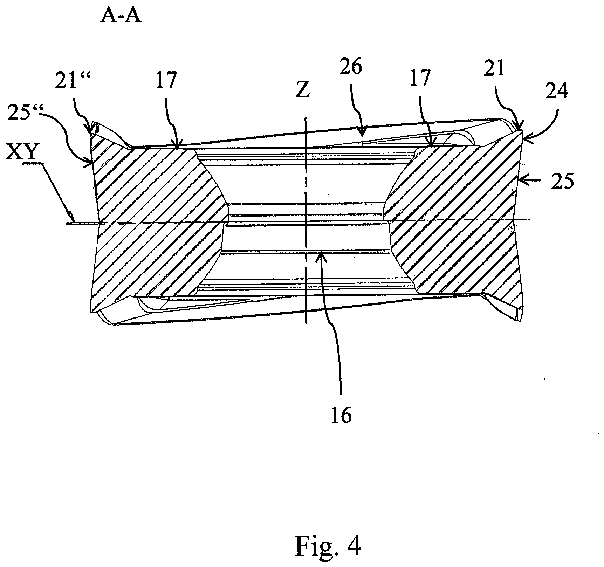

- Fig. 4:: einen Schnitt in der Richtung A-A in Fig. 3;
- Fig. 5:: eine partielle Schnittdarstellung eines Schnitts in der Richtung B-B in Fig. 3;
- Fig. 6:: eine partielle Schnittdarstellung eines Schnitts in der Richtung C-C in Fig. 3;
- Fig. 7:: eine vergrößerte Darstellung einzelner Details in Aufsicht auf den Schneideinsatz von Fig. 3;
- Fig. 8:: eine perspektivische Ansicht des Trägerkörpers des Fräswerkzeugs mit daran befestigten Schneideinsätzen;
- Fig. 9:: eine Aufsicht auf die Stirnseite des Fräswerkzeugs von Fig. 8; und
- Fig. 10:: eine Seitenansicht auf das Fräswerkzeug von Fig. 8.

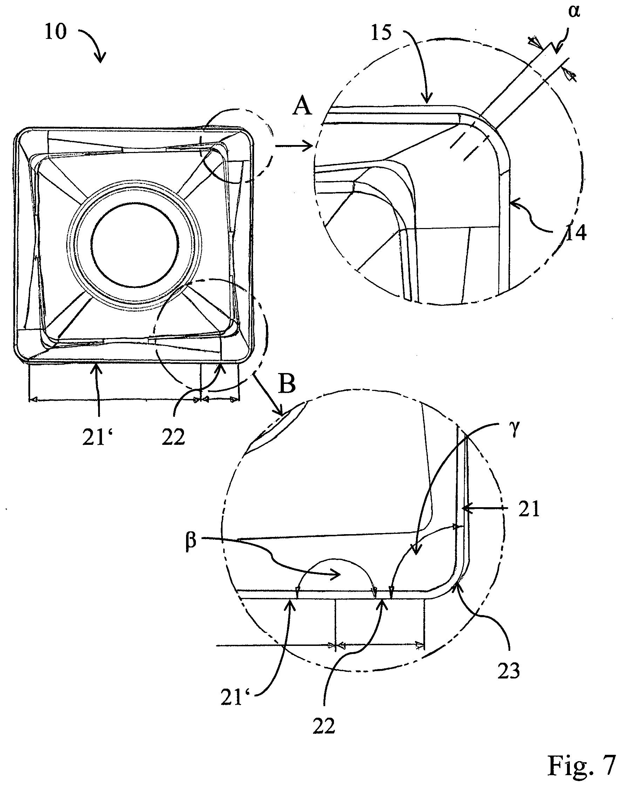

Der doppelseitige Schneideinsatz (10) ist als Wendeschneidplatte vom sogenannten S-Typ (square, quadratisch) ausgebildet und weist eine Oberseite (11), eine Unterseite (12) und eine umlaufende Seitenfläche (13) auf, die die Mantelfläche des Grundkörpers bildet. Der Grundkörper des Schneideinsatzes hat in Aufsicht auf die Oberseite eine im Wesentlichen quadratische Grundform. Am Übergang bzw. der Verschneidung zwischen der Oberseite (11) und der Seitenfläche (13) ist eine erste Schneidkante (14) ausgebildet, am Übergang zwischen der Unterseite (12) und der Seitenfläche (13) ist eine zweite Schneidkante (15) ausgebildet. Der Schneideinsatz (10) weist eine 4-zählige Rotationssymmetrie bezüglich der Symmetrieachse (Z) auf, die senkrecht zu einer (gedachten) Referenzebene (XY) verläuft, die den Schneideinsatz (10) in zueinander identische obere und untere Hälften unterteilt. Wie der Fig. 7 (Detail A) zu entnehmen ist, ist die äußere Kontur der Schneidecken der ersten Schneidkante (14) bezüglich der Symmetrieachse (Z) gegenüber der äußeren Kontur der Schneidecken der zweiten Schneidkante (15) derart um einen ersten Winkel (α) verdreht, dass in Aufsicht auf die Oberseite (10) die Mitte einer Schneidecke der ersten Schneidkante (14) jeweils nicht mit der Mitte der dahinterliegenden Schneidecke der zweiten Schneidkante (15) fluchtet. Bei dem dargestellten Ausführungsbeispiel beträgt der Winkel (α) ca. 2°. Konzentrisch zur Symmetrieachse (Z) verläuft eine Bohrung (16), die den Schneideinsatz von der Oberseite (11) zur Unterseite (12) durchdringt und zur Aufnahme einer Befestigungsschraube zum Befestigen des Schneideinsatzes (10) an einem Trägerkörper eines Fräswerkzeugs vorgesehen ist. Angrenzend an die Bohrung (16) ist sowohl an der Oberseite (11) als auch an der Unterseite (12) eine Auflagefläche (17) vorgesehen, die sich parallel zur Referenzebene (XY) erstreckt und als Auflagefläche bei der Befestigung des Schneideinsatzes (10) an dem Trägerkörper des Fräswerkzeugs dient.

Die erste Schneidkante (14) und die zweite Schneidkante (15) weisen jeweils vier unabhängig voneinander einsetzbare, identisch ausgebildete Schneidkantenabschnitte (20, 20', 20", 20"') auf. Die Schneidkantenabschnitte weisen dabei jeweils eine Hauptschneide (21, 21', 21", 21"') und eine Planschneide (22, 22', 22", 22"') auf, die über eine zugeordnete Schneidecke (23, 23', 23", 23"') miteinander verbunden sind bzw. ineinander übergehen. Aufgrund der 4-zähligen Rotationssymmetrie des Schneideinsatzes beschränkt sich die folgende Beschreibung primär auf eine Schneidkante und einen Schneidkantenabschnitt. Die Hauptschneide (21), Planschneide (22) und zugeordnete Schneidecke (23) eines Schneideckenabschnitts (20) werden im Betrieb des jeweiligen Schneidkantenabschnittes gleichzeitig zur Materialbearbeitung benutzt. Die Hauptschneiden und Planschneiden sind entlang der jeweiligen Schneidkante (14) bzw. (15) alternierend angeordnet, an den Ecken unterbrochen durch Schneidecken (23), und grenzen direkt aneinander an bzw. gehen in einander über. Die beiden Schneidkanten (14, 15) sind also als vollumfängliche Schneide ausgeführt. Die Hauptschneiden sind länger als die Planschneiden und weisen eine Länge zwischen dem vier- und fünffachen der Länge der Planschneiden auf. In Aufsicht entlang der Symmetrieachse (Z) betrachtet, schließen die entlang der Seitenlinie benachbarten, jeweils unterschiedlichen Schneidkantenabschnitten zugehörigen Hauptschneiden (21') und Planschneiden (22) einen stumpfen Innenwinkel (β), z.B. zwischen etwa 178° und kleiner als 180° ein, wie in Fig. 7 zu sehen ist. Die Hauptschneide (21) und die an derselben Schneidecke (23) anliegende Planschneide (22) schließen in Aufsicht entlang der Symmetrieachse (Z) jeweils einen inneren Winkel (γ) zwischen etwa 90° bis 92° ein, bevorzugt größer als 90°.

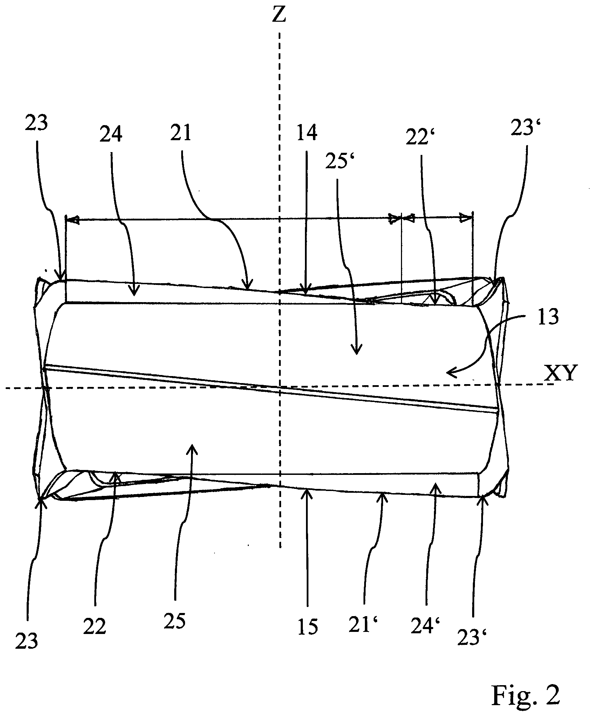

Wie beispielsweise Fig. 2 zu entnehmen ist, haben die erste und zweite Schneidkante (14, 15) jeweils im Bereich der Schneidecken den größten Abstand von der gedachten Referenzebene (XY). Die zu einer Schneidecke (23) zugehörige Hauptschneide (21) und die in Verlängerung an diese anschließende, einem anderen Schneidkantenabschnitt zugehörige Planschneide (22') nähern sich ausgehend von der Schneidecke (23) monoton abfallend mit zunehmender Entfernung von der Schneidecke der Referenzebene (XY) an. Der an die Schneidecke (23) anschließende Bereich der Hauptschneide (21) weist somit einen größeren Abstand zu der Referenzebene (XY) auf, als der an die andere Seite der Schneidecke (23) anschließende Bereich der Planschneide (22).

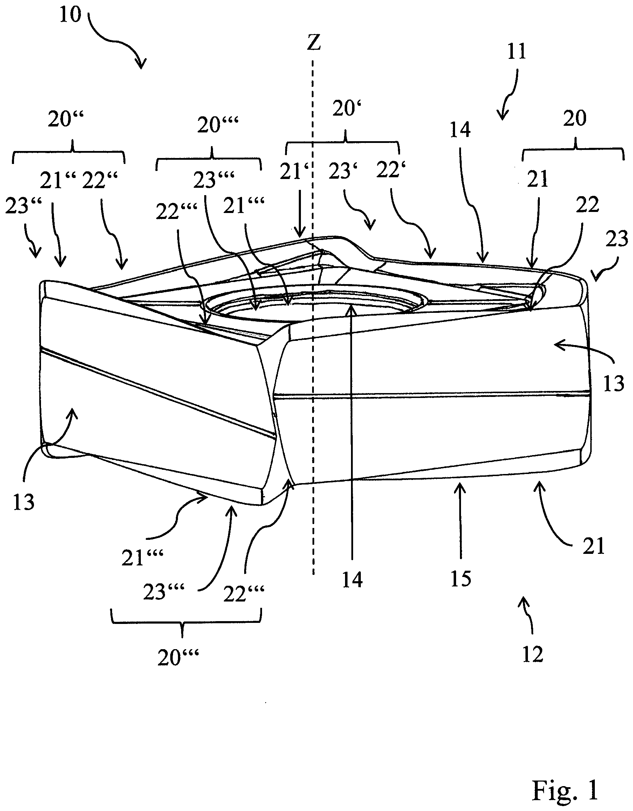

Der Hauptschneide (21) ist jeweils eine ebene Hauptfreifläche (24) zugeordnet, die unmittelbar angrenzend an die Hauptschneide in der umlaufenden Seitenfläche (13) ausgebildet ist. Der Planschneide (22) ist jeweils eine ebene Planfreifläche (25) zugeordnet, die unmittelbar angrenzend an die Planschneide in der umlaufenden Seitenfläche (13) ausgebildet ist. Wie insbesondere in Fig. 1 und Fig. 2 zu sehen ist, ist die Hauptfreifläche (24) als eine Facette der Ebene der Planfreifläche (25') der benachbarten Planschneide (22') eines angrenzenden Schneidkantenabschnitts (20') ausgebildet.

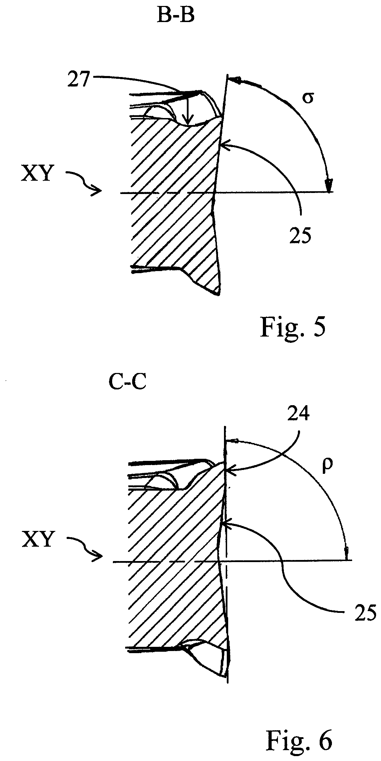

Der Verlauf der Freiflächen im Bereich der Hauptschneiden und im Bereich der Planschneiden wird aus den Fig. 5 und Fig. 6 ersichtlich, wo jeweils ein Schnitt durch den Schneideinsatzes im Bereich der Hauptschneide (Fig. 6) bzw. im Bereich der Planschneide (Fig. 5) dargestellt ist, wobei die Schnittposition so gewählt wurde, dass beide Schnittbereiche in etwa denselben Abstand von gegenüberliegenden, benachbarten Schneidecken haben.

Die Planfreiflächen (25) verlaufen derart, dass sie sich mit zunehmendem Abstand von der zugeordneten Planschneide (22) der Symmetrieachse (Z) annähern, d.h. sie bilden gemessen zur Referenzebene in einer Schnittebene senkrecht auf die Referenzebene (XY) und im Wesentlichen senkrecht zu der Schneidkante einen spitzen Außenwinkel (σ) mit der Referenzebene aus, im Ausführungsbeispiel einen Außenwinkel (σ) von etwa 83°. Somit verläuft die Planfreifläche (25) im Ausführungsbeispiel unter einem nominellen Planfreiwinkel (90° - σ) von etwa 7°.

Die Hauptfreiflächen (24) verlaufen derart, dass sie sich mit zunehmendem Abstand von der zugeordneten Hauptschneide (21) von der Symmetrieachse (Z) entfernen, d.h. sie verlaufen jeweils unter einem stumpfen Außenwinkel (ρ) gemessen zur Referenzebene (XY). Im Ausführungsbeispiel beträgt der Außenwinkel (ρ) etwa 91°. Somit weist die Hauptfreifläche (24) im Ausführungsbeispiel einen nominellen Hauptfreiwinkel (90° - ρ) von etwa - 1° auf, somit einen negativen nominellen Hauptfreiwinkel.

Gemessen zur Referenzebene des Schneideinsatzes sind die Außenwinkel (ρ) im Bereich der Hauptschneiden also größer als die Außenwinkel (σ) im Bereich der Planschneiden. Mit anderen Worten sind die nominellen Hauptfreiwinkel kleiner als die nominellen Planfreiwinkel.

Da die Hauptfreifläche und Planfreifläche gegenüber der Referenzebene unterschiedlich geneigt sind und beide als ebene Flächen ausgebildet sind, ergibt sich für die umlaufende Seitenfläche eine segmentierte Struktur, bei der die Hauptfreifläche spitz auf das Ende der Hauptschneide zuläuft und sich über einen flächenmäßig kleineren Bereich erstreckt. Die Planfreifläche erstreckt sich bis zu einem Bereich in der Nähe der Referenzebene (XY), wo sie auf die Planfreifläche trifft, die der auf der gegenüberliegenden Seite des Schneideinsatzes befindlichen Planschneide zugeordnet ist.

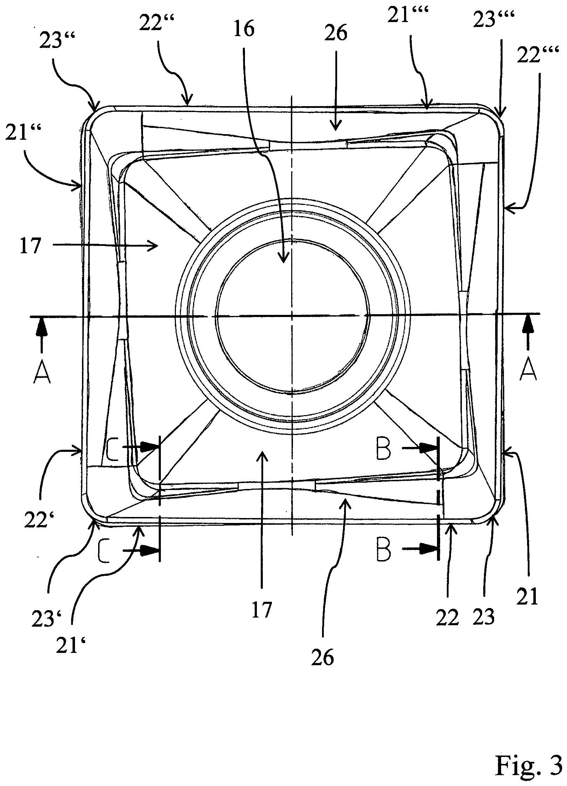

Wie Fig. 1 bzw. Fig. 3 zu entnehmen ist, weist die Oberseite bzw. Unterseite angrenzend an die jeweilige Schneidkante Spanflächen (26) auf, die sich mit zunehmender Entfernung von der jeweiligen Schneidkante an die Auflagefläche (17), die sich parallel zur Referenzebene erstreckt und als Auflagefläche zur Befestigung des Schneidwerkzeugs dient, annähern und in diese übergehen. Die Auflagefläche (17) muss nicht als ebene Fläche ausgebildet sein. Bevorzugt können die Oberseite und die Unterseite jeweils mit spanleitenden Strukturen versehen sein, um die Spanformung zu verbessern. Vor allem im Bereich der Planschneiden ist im Verlauf der Spanflächen (26) eine gewölbte Vertiefung vorgesehen, die den minimalen Abstand zwischen der Oberseite und der Referenzebene (XY) bildet und die unter Ausbildung eines ansteigenden Rückens in Richtung Symmetrieachse (Z) in die Auflagefläche (17) übergeht. Die Tiefe (gemessen in einer Richtung entlang der Symmetrieachse) und Breite (gemessen in einer Richtung parallel zur Referenzebene) dieses Spangrunds ist im Bereich der Mitte der Planschneiden am größten.

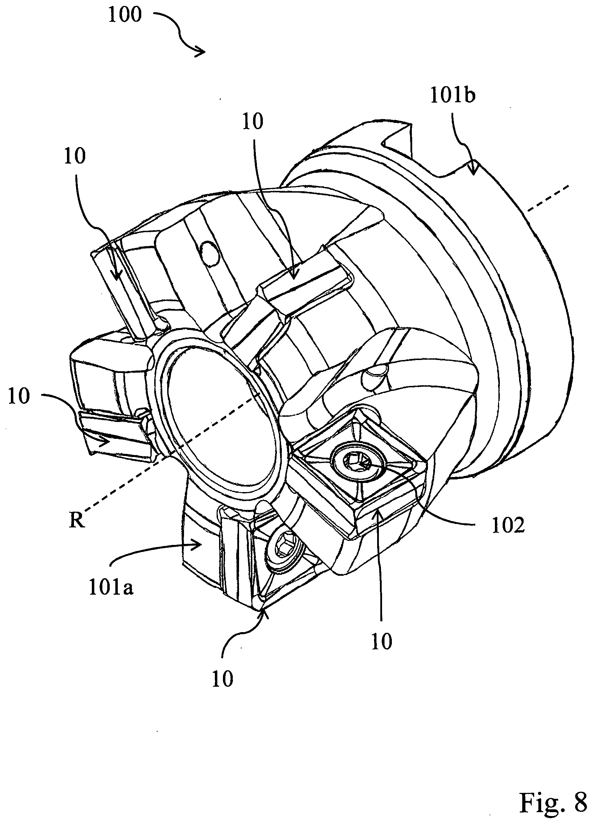

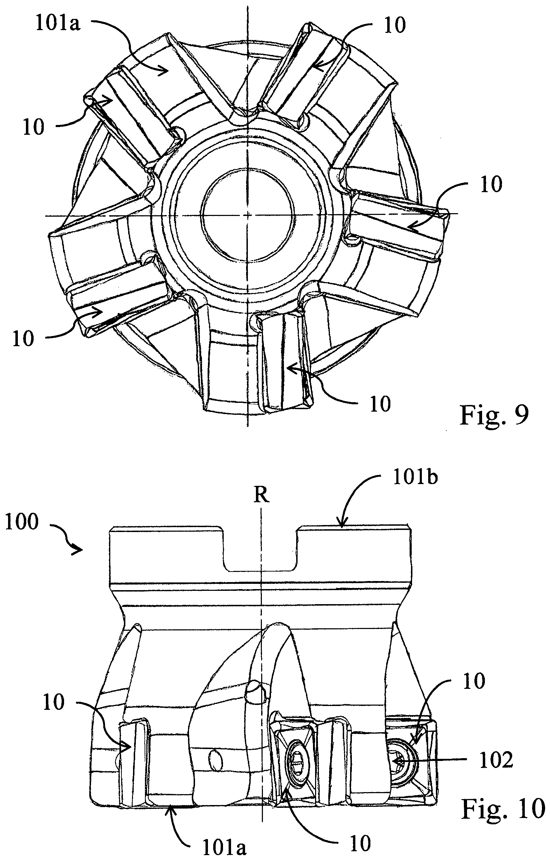

In Fig. 8 bis Fig. 10 ist ein Fräswerkzeug mit einem Trägerkörper (100) und einer Mehrzahl von daran befestigten Schneidwerkzeugen (10) abgebildet. In den Figuren ist ein Trägerkörper mit fünf Schneideinsätzen dargestellt, es sind aber natürlich auch Ausführungen des Trägerkörpers mit weniger (mindestens eine, bevorzugt zumindest zwei) oder mehr Schneideinsätzen möglich. Der Trägerkörper (100) weist eine Rotationsachse (R) auf, um die der Trägerkörper im Betrieb rotiert. Im Bereich der Stirnfläche (101a) des Trägerkörpers sind in radialer Ausrichtung eine Mehrzahl von Schneideinsätzen (10) mittels Schraubverbindungen (102) montiert. Der Trägerkörper ist an seinem zweiten Ende (101b) entsprechend adaptiert, um an eine Bearbeitungsmaschine, insbesondere eine Fräsmaschine angekoppelt zu werden. Die aktiven, während des Betriebs in das Werkstück eingreifenden Planschneiden sind im Wesentlichen senkrecht zur Rotationsachse (R) des Trägerkörpers ausgerichtet und in Rotationsrichtung an der vorderen Schneidkante angeordnet. Die an die Planschneide angrenzende Hauptschneide, die sich bezüglich der Rotationsachse radial außen befindet und in Rotationsrichtung an der vorderen Schneidkante angeordnet ist, bildet die aktive, ins zu bearbeitende Werkstück eingreifende Hauptschneide. Die Schneideinsätze (10) sind jeweils sowohl in radialer Richtung als auch axialer Richtung verkippt, um die inaktiven Schneidkanten vor Beschädigung zu schützen.

Mit Hilfe des erfindungsgemäßen Fräswerkzeugs kann das Werkstückmaterial schulterförmig abgetragen werden, insbesondere können Schultern mit 90°-Ecken gefräst werden. Durch die entsprechende Ausgestaltung der Schneideinsätze werden Oberflächenwellungen des bearbeiteten Werkstücks minimiert und dadurch eine hohe Güte der bearbeiteten Werkstückoberfläche erzielt.

## Patentansprüche

1. Doppelseitiger Schneideinsatz (10) zum Eckfräsen, mit
einer Oberseite (11);
einer Unterseite (12);
einer umlaufenden Seitenfläche (13);
einer ersten Schneidkante (14), die an einem Übergang von der Oberseite (11) zu der umlaufenden Seitenfläche (13) ausgebildet ist;
einer zweiten Schneidkante (15), die an einem Übergang von der Unterseite (12) zu der umlaufenden Seitenfläche (13) ausgebildet ist;
einer Symmetrieachse (Z), bezüglich der der Schneideinsatz (10) eine 4-zählige Rotationssymmetrie aufweist; und
einer senkrecht zu der Symmetrieachse verlaufenden Referenzebene (XY), die den Schneideinsatz in zwei Hälften unterteilt;
wobei der Schneideinsatz (10) in Aufsicht auf die Oberseite eine im Wesentlichen quadratische Grundform besitzt und die erste Schneidkante (14) und die zweite Schneidkante (15) jeweils vier Schneidkantenabschnitte (20, 20', 20", 20"') aufweisen,
ein Schneidkantenabschnitt (20, 20', 20", 20"') jeweils eine Hauptschneide (21, 21', 21", 21"') und eine Planschneide (22, 22', 22", 22"') aufweist, die über eine zugehörige abgerundete Schneidecke (23, 23', 23", 23"') miteinander verbunden sind,
**dadurch gekennzeichnet, dass** die erste und zweite Schneidkante (14,15) jeweils im Bereich der Schneidecken (23, 23', 23", 23"') den größten Abstand von der Referenzebene (XY) hat,
wobei jeweils unmittelbar angrenzend an eine zugeordnete Hauptschneide (21, 21', 21", 21"') in der umlaufenden Seitenfläche (13) eine Hauptfreifläche (24, 24', 24", 24"') ausgebildet ist,
wobei jeweils unmittelbar angrenzend an eine zugeordnete Planschneide (22, 22', 22", 22"') in der umlaufenden Seitenfläche (13) eine Planfreifläche (25, 25', 25", 25"') ausgebildet ist, und
wobei die zwischen den Hauptfreiflächen (24, 24', 24", 24"') und der Referenzebene (XY) gebildeten Außenwinkel (ρ) größer sind als die zwischen den Planfreiflächen (25, 25', 25", 25"') und der Referenzebene (XY) gebildeten Außenwinkel (σ).

2. Schneideinsatz nach einem der vorangehenden Ansprüche, **dadurch gekennzeichnet, dass** in Aufsicht auf die Oberseite (11) die äußere Kontur der ersten Schneidkante (14) nicht deckungsgleich mit der äußeren Kontur der zweiten Schneidkante (15) ist.

3. Schneideinsatz nach einem der vorangehenden Ansprüche, **dadurch gekennzeichnet, dass** in Aufsicht auf die Oberseite (11) die Schneidecken der ersten Schneidkante (14) nicht mit den Schneidecken der zweiten Schneidkante (15) fluchten.

4. Schneideinsatz nach einem der vorangehenden Ansprüche, **dadurch gekennzeichnet, dass** die Hauptfreiflächen (24, 24', 24", 24"') als ebene Flächen ausgebildet sind.

5. Schneideinsatz nach einem der vorangehenden Ansprüche, **dadurch gekennzeichnet, dass** die Hauptschneide (21) und die benachbarte, über die gemeinsame Schneidecke (23) verbundene Planschneide (22) in Aufsicht auf die Oberseite einen Winkel (γ) größer 90° einschließen.

6. Schneideinsatz nach einem der vorangehenden Ansprüche, **dadurch gekennzeichnet, dass** die Länge der Hauptschneiden (21, 21', 21", 21"') mehr als das vier-fache der Länge der Planschneiden (22, 22', 22", 22"') beträgt.

7. Schneideinsatz nach einem der vorangehenden Ansprüche, **dadurch gekennzeichnet, dass** die zwischen den Hauptfreiflächen (24, 24', 24", 24"') und der Referenzebene (XY) gebildeten Außenwinkel (ρ) 90° oder mehr betragen.

8. Schneideinsatz nach einem der vorangehenden Ansprüche, **dadurch gekennzeichnet, dass** die zwischen den Planfreiflächen (25, 25', 25", 25"') und der Referenzebene (XY) gebildeten Außenwinkel (σ) weniger als 90° betragen.

9. Schneideinsatz nach einem der vorangehenden Ansprüche, **dadurch gekennzeichnet, dass** der Schneideinsatz (10) als ein Radial-Schneideinsatz ausgebildet ist.

10. Fräswerkzeug mit mindestens einem Schneideinsatz (10) nach einem der vorangehenden Ansprüche, **dadurch gekennzeichnet, dass** der Schneideinsatz (10) in radialer Ausrichtung an einem Trägerkörper (100) des Fräswerkzeugs befestigt ist.

11. Fräswerkzeug nach Anspruch 10, **dadurch gekennzeichnet, dass** eine aktive Hauptschneide (21) des Schneideinsatzes im Wesentlichen entlang einer um die Rotationsachse (R) des Fräswerkzeugs konzentrischen Zylinderfläche ausgerichtet ist.

## Claims

1. A double-sided cutting insert (10) for corner milling, said cutting insert having
a top surface (11);
a bottom surface (12);
a circumferential lateral face (13);
a first cutting edge (14) which is realized at a transition from the top surface (11) to the circumferential lateral face (13);
a second cutting edge (15) which is realized at a transition from the bottom surface (12) to the circumferential lateral face (13);
an axis of symmetry (Z) with reference to which the cutting insert (10) comprises a 4-fold rotational symmetry; and
a reference plane (XY) which extends perpendicular to the axis of symmetry and divides the cutting insert into two halves;
wherein the cutting insert (10) has a substantially square-shaped basic form in a top view onto the top surface and the first cutting edge (14) and the second cutting edge (15) comprise in each case four cutting edge portions (20, 20', 20", 20"'),
one cutting edge portion (20, 20', 20", 20"') comprises in each case a main edge (21, 21', 21", 21"') and a wiper edge (22, 22', 22", 22"'), both of which are connected together by means of an associated rounded cutting corner (23, 23', 23", 23"'),
**characterized in that** the first and second cutting edges (14,15) are in each case at the greatest distance from the reference plane (XY) in the region of the cutting corners (23, 23', 23", 23"'),
wherein a main clearance face (24, 24', 24", 24"') is realized in each case directly adjoining an assigned main edge (21, 21', 21", 21"') in the circumferential lateral face (13),
wherein a wiper clearance face (25, 25', 25", 25"') is realized in each case directly adjoining an assigned wiper edge (22, 22', 22", 22"') in the circumferential lateral face (13), and
wherein the exterior angles (ρ) formed between the main clearance faces (24, 24', 24", 24"') and the reference plane (XY) are greater than the exterior angles (σ) formed between the wiper clearance faces (25, 25', 25", 25"') and the reference plane (XY).

2. The cutting insert as claimed in one of the preceding claims, **characterized in that** when viewed in a top view onto the top surface (11), the outer contour of the first cutting edge (14) is not aligned with the outer contour of the second cutting edge (15).

3. The cutting insert as claimed in one of the preceding claims, **characterized in that** when viewed in a top view onto the top surface (11), the cutting corners of the first cutting edge (14) are not in alignment with the cutting corners of the second cutting edge (15).

4. The cutting insert as claimed in one of the preceding claims, **characterized in that** the main clearance faces (24, 24', 24", 24"') are realized as planar faces.

5. The cutting insert as claimed in one of the preceding claims, **characterized in that** the main cutting edge (21) and the adjacent wiper edge (22), which is connected by means of the common cutting corner (23), enclose an angle (γ) of greater than 90° when viewed in a top view onto the top surface.

6. The cutting insert as claimed in one of the preceding claims, **characterized in that** the length of the main edges (21, 21', 21", 21"') is more than four times the length of the wiper edges (22, 22', 22", 22"').

7. The cutting insert as claimed in one of the preceding claims, **characterized in that** the exterior angles (ρ) formed between the main clearance faces (24, 24', 24", 24"') and the reference plane (XY) are 90° or more.

8. The cutting insert as claimed in one of the preceding claims, **characterized in that** the exterior angles (σ) formed between the wiper clearance faces (25, 25', 25", 25"') and the reference plane (XY) are less than 90°.

9. The cutting insert as claimed in one of the preceding claims, **characterized in that** the cutting insert (10) is realized as a radial cutting insert.

10. A milling tool having at least one cutting insert (10) as claimed in one of the preceding claims, **characterized in that** the cutting insert (10) is fastened in radial arrangement on a support body (100) of the milling tool.

11. The milling tool as claimed in claim 10, **characterized in that** an active main edge (21) of the cutting insert is aligned substantially along a cylindrical surface which is concentric about the rotational axis (R) of the milling tool.

## Revendications

1. Plaquette de coupe (10) double face pour le fraisage d'angle, ladite plaquette de coupe ayant
une surface supérieure (11) ;
une surface inférieure (12) ;
une face latérale circonférentielle (13) ;
une première arête de coupe (14) qui est réalisée au niveau d'une transition de la surface supérieure (11) vers la face latérale circonférentielle (13) ;
une deuxième arête de coupe (15) qui est réalisée au niveau d'une transition de la surface inférieure (12) vers la face latérale circonférentielle (13) ;
un axe de symétrie (Z) par rapport auquel la plaquette de coupe (10) présente une symétrie de révolution quadruple ; et
un plan de référence (XY) qui s'étend perpendiculairement à l'axe de symétrie et divise la plaquette de coupe en deux moitiés ;
la plaquette de coupe (10) ayant une forme de base sensiblement carrée en vue de dessus de la surface supérieure et la première arête de coupe (14) et la deuxième arête de coupe (15) comprenant respectivement quatre parties d'arête de coupe (20, 20', 20", 20"'),
une partie d'arête de coupe (20, 20', 20", 20"') comprenant respectivement une arête principale (21, 21', 21", 21"') et une arête de planage (22, 22', 22", 22"'), lesquelles sont reliées l'une à l'autre par le biais d'un coin de coupe arrondi (23, 23', 23", 23"') associé,
**caractérisée en ce que** les première et deuxième arêtes de coupe (14, 15) sont respectivement situées à la plus grande distance du plan de référence (XY) dans la région des coins de coupe (23, 23', 23", 23"'),
une face de dépouille principale (24, 24', 24", 24"') étant réalisée respectivement de manière directement adjacente à une arête principale (21, 21', 21", 21"') associée dans la face latérale circonférentielle (13),
une face de dépouille de planage (25, 25', 25", 25"') étant réalisée respectivement de manière directement adjacente à une arête de planage (22, 22', 22", 22"') associée dans la face latérale circonférentielle (13), et
les angles extérieurs (ρ) formés entre les faces de dépouille principales (24, 24', 24", 24"') et le plan de référence (XY) étant supérieurs aux angles extérieurs (σ) formés entre les faces de dépouille de planage (25, 25', 25", 25"') et le plan de référence (XY).

2. Plaquette de coupe selon l'une des revendications précédentes, **caractérisée en ce qu'**en vue de dessus de la surface supérieure (11), le contour extérieur de la première arête de coupe (14) n'est pas aligné avec le contour extérieur de la deuxième arête de coupe (15).

3. Plaquette de coupe selon l'une des revendications précédentes, **caractérisée en ce qu'**en vue de dessus de la surface supérieure (11), les coins de coupe de la première arête de coupe (14) ne sont pas en alignement avec les coins de coupe de la deuxième arête de coupe (15).

4. Plaquette de coupe selon l'une des revendications précédentes, **caractérisée en ce que** les faces de dépouille principales (24, 24', 24", 24"') sont réalisées en tant que faces planes.

5. Plaquette de coupe selon l'une des revendications précédentes, **caractérisée en ce que** l'arête de coupe principale (21) et l'arête de planage adjacente (22), laquelle est reliée par le biais du coin de coupe commun (23), forment un angle (γ) de plus de 90° en vue de dessus de la surface supérieure.

6. Plaquette de coupe selon l'une des revendications précédentes, **caractérisée en ce que** la longueur des arêtes principales (21, 21', 21", 21"') vaut plus de quatre fois la longueur des arêtes de planage (22, 22', 22", 22"').

7. Plaquette de coupe selon l'une des revendications précédentes, **caractérisée en ce que** les angles extérieurs (ρ) formés entre les faces de dépouille principales (24, 24', 24", 24"') et le plan de référence (XY) sont de 90° ou plus.

8. Plaquette de coupe selon l'une des revendications précédentes, **caractérisée en ce que** les angles extérieurs (σ) formés entre les faces de dépouille de planage (25, 25', 25", 25"') et le plan de référence (XY) sont de moins de 90°.

9. Plaquette de coupe selon l'une des revendications précédentes, **caractérisée en ce que** la plaquette de coupe (10) est réalisée en tant que plaquette de coupe radiale.

10. Outil de fraisage ayant au moins une plaquette de coupe (10) selon l'une des revendications précédentes, **caractérisé en ce que** la plaquette de coupe (10) est fixée suivant un agencement radial sur un corps de support (100) de l'outil de fraisage.

11. Outil de fraisage selon la revendication 10, **caractérisé en ce qu'**une arête principale active (21) de la plaquette de coupe est alignée sensiblement le long d'une surface cylindrique qui est concentrique autour de l'axe de rotation (R) de l'outil de fraisage.
